# EUROPEAN PATENT SPECIFICATION

(11) **EP 3 401 920 B1**
(45) Date of publication and mention of the grant of the patent: **06.01.2021**
(21) Application number: 16883938.9
(22) Date of filing: 15.04.2016
(51) Int. Cl.: G21B 1/23, G01J 3/02, G02B 27/10, G21B 1/05

(54) **PLASMA DIAGNOSTIC SYSTEM USING MULTIPLE RECIPROCATING PATH THOMSON SCATTERING**
PLASMADIAGNOSESYSTEM MIT MEHRFACHER THOMSON-STREUUNG MIT HIN- UND HERGEHENDEM PFAD
SYSTÈME DE DIAGNOSTIC À PLASMA UTILISANT LA DIFFUSION DE THOMSON SUR PLUSIEURS TRAJETS RÉCIPROQUES

(30) Priority: 08.01.2016 KR 20160002627
(43) Date of publication of application: 14.11.2018
(73) Proprietor: Industry-University Cooperation Foundation Sogang University, Seoul 04107 (KR)
(72) Inventor: CHO, Kyu Man, Seoul 01020 (KR); PARK, Jun Gyu, Seoul 07359 (KR); YOON, Seung Hyun, Seoul 02726 (KR); AHN, Wha-Keun, Andong-si Gyeongsangbuk-do 36742 (KR)
(74) Representative: Krauss, Jan
(86) International application number: PCT/KR2016/003953
(87) International publication number: WO 2017/119552

(56) References cited:
- JP-A- H05 312 712
- JP-A- H06 102 086
- JP-A- 2003 240 715
- JP-A- 2003 240 715
- KR-A- 20130 099 641
- US-A- 5 760 388
- YOSHIKAWA M ET AL: "Development of polarization-controlled multi-pass Thomson scattering system in the GAMMA 10 tandem mirror", REVIEW OF SCIENTIFIC INSTRUMENTS, AIP, MELVILLE, NY, US, vol. 83, no. 10, 1 October 2012 (2012-10-01), pages 10E333-10E333, XP012161632, ISSN: 0034-6748, DOI: 10.1063/1.4734490 [retrieved on 2012-07-19]
- YASUHARA R ET AL: "Design of the polarization multi-pass Thomson scattering system", REVIEW OF SCIENTIFIC INSTRUMENTS, AIP, MELVILLE, NY, US, vol. 83, no. 10, 1 October 2012 (2012-10-01), pages 10E326-10E326, XP012161625, ISSN: 0034-6748, DOI: 10.1063/1.4734495 [retrieved on 2012-07-16]
- TOGASHI H ET AL: "Thomson scattering measurements in low-density plasmas in the TST-2 spherical tokamak", JOURNAL OF INSTRUMENTATION, INSTITUTE OF PHYSICS PUBLISHING, BRISTOL, GB, vol. 10, no. 12, 21 December 2015 (2015-12-21), XP020293278, ISSN: 1748-0221, DOI: 10.1088/1748-0221/10/12/C12020 [retrieved on 2015-12-21]

## Description

### TECHNICAL FIELD

The present invention relates to a plasma diagnosis system using Thomson scattering, and more particularly, a plasma diagnosis system using multiple-reciprocating-path Thompson scattering capable of measuring an accurate Thomson scattering signal by measuring a Thomson scattering signal and a background scattering noise signal in plasma by using an optical system configured to rotate polarization by 90 degrees according to the number of times of reciprocating propagation and removing the background scattering noise signal.

### BACKGROUND ART

In tokamak-type nuclear fusion, typically, deuterium atoms and tritium atoms are heated up to so high temperature to generate a plasma state in which ionized atomic nuclei and electrons have free mobility, and the plasma is confined by using a strong toroidal magnetic field, so that the nuclei overcome Coulomb force and come close enough to cause fusion reaction at sufficiently high temperature. In order to stably operate and control this high-temperature, high-density plasma state, it is necessary to know the temperature and density of the plasma, and thus, accurate measurement thereof is required. As a result of this request, various types of plasma diagnosis apparatuses have been developed and used. As one of the plasma diagnosis apparatuses, there is a diagnosis apparatus using Thomson scattering, which is an essential diagnosis apparatus for measuring temperature and density of electrons.

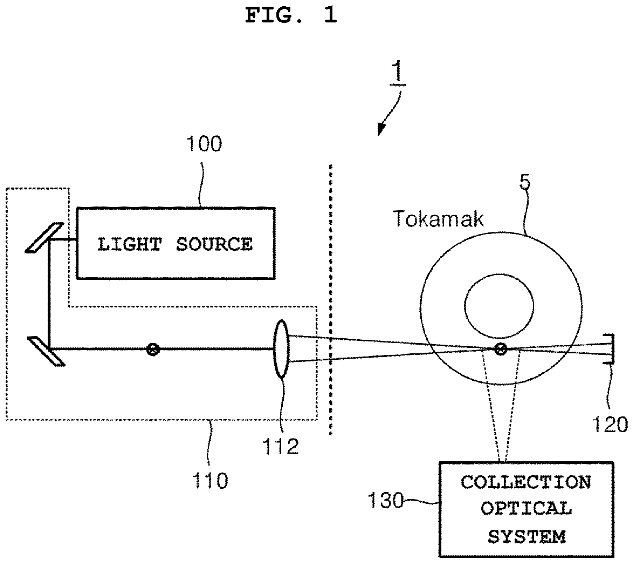

FIG. 1 is a configuration diagram schematically illustrating a diagnosis apparatus using Thompson scattering in the related art for diagnosing a state of plasma in a tokamak of a nuclear fusion reactor.

Referring to FIG. 1, a diagnosis apparatus 1 using Thomson scattering in the related art for diagnosing a state of plasma in a tokamak 5 of a nuclear fusion reactor includes a light source which outputs a strong pulsed laser beam polarized in a vertical direction, an optical system 110 which focuses the laser beam in the vertical polarization state into a plasma in the TOKAMAK, a laser beam dump 120 which is mounted outside the tokamak and absorbs and removes the laser beam emitted from the tokamak, and a collection optic system 130 which collects the light scattered by the laser beam.

More specifically, in order to measure the temperature and density of electrons in the plasma, the above-described diagnosis apparatus 1 using Thomson scattering focuses a laser pulse with a single wavelength (1064 nm) having a strong electric field intensity from the outside of the tokamak 5 into the plasma-filled tokamak by using the light source 100 and the optical system 110. The nuclei and electrons constituting the plasma are vibrated in the polarization direction of the electric field of the laser beam according to a temporal change of the strong unidirectional electric field strength (polarized light) of the focused laser beam, and a light beam with the same frequency as the incident laser beam is emitted and is subjected to Thompson scattering. In this case, the light is not subjected to Thomson scattering in the direction parallel to the polarization direction of the laser beam. Therefore, in the case where the polarization of the laser beam incident on the cross section of the tokamak in FIG. 1 is perpendicular to this cross section, scattered light is emitted in the direction of collection optic system, so that the scattered light can be received by the collection optic system. On the contrary, in the case where the laser beam is horizontally polarized with respect to the cross section of tokamak in FIG. 1, no Thomson scattered light is emitted toward the collection optic system, so that there is no Thomson scattered light received by the collection optic system.

On the other hand, since the plasmas are moving fast, the scattered light has a Doppler shift in wavelength due to the Doppler effect. Therefore, the diagnosis apparatus using Thomson scattering can acquire the temperature of electrons in the plasma by measuring the wavelength shift due to the Doppler effect and can also acquire the density of electrons according to the intensity of light to be measured. That is, if signals of the Thomson scattered light in the plasma are accurately measured, the temperature and density of the plasma can be accurately acquired.

However, there exist the light beams that are reflected by incomplete optical parts to be incident on the tokamak and the light beams that are scattered multiple times by wall surfaces of the tokamak and the like, and these light beams are called stray light.

Yoshikawa et al. (in: "Development of polarization-controlled multipass Thomson scattering system in the GAMMA 10 tandem mirror", Review of Scientific Instruments, AIP, vol. 83, no. 10, 1 October 2012, pages 10E333-10E333, XP012161632, ISSN: 0034-6748), Yasuhara et al. (in: "Design of the polarization multi-pass Thomson scattering system", Review of Scientific Instruments, AIP, vol. 83, no. 10, 1 October 2012, pages 10E326-10E326, XP012161625, ISSN: 0034-6748), JP 2003-240715 A, and Togashi et al. (in: "Thomson scattering measurements in low-density plasmas in the TST-2 spherical tokamak", J Instrumentation, vol. 10, no. 12, 21 December 2015, XP020293278, ISSN: 1748-0221) disclose plasma diagnosis systems using multiple-reciprocating-path Thomson scattering, nevertheless, the devices still include a background scattering noise signal.

As the background noise caused by the stray light is included in the Thomson scattering signal measured by the diagnosis apparatus using Thomson scattering in the related art, there is a problem in that the accuracy of the measured Thompson scattering signal is lowered.

### SUMMARY OF THE INVENTION

### TECHNICAL PROBLEM

In order to solve the problems described above, the present invention is to provide a plasma diagnosis system using a multiple-reciprocating-path Thomson scattering system capable of measuring an accurate Thomson scattering signal from which a background scattering noise signal is removed by using an optical system.

### SOLUTION TO PROBLEMS

According to an aspect of the present invention, according to claim 1 there is provided a plasma diagnosis system using multiple-reciprocating-path Thomson scattering, comprising:
a light source (200) which supplies pulsed laser beams having predetermined polarization and wavelength; an optical system (220) which sequentially supplies a pulsed laser beam in a vertical polarization state and a pulsed laser beam in a horizontal polarization state by using the pulsed laser beams supplied from the light source (200) ; a collection optic system (230) which measures a first collection signal scattered from the plasma when the pulsed laser beam in the vertical polarization state supplied from the optical system is focused and measures a second collection signal scattered from the plasma when the pulsed laser beam in the horizontal polarization state supplied from the optical system (220) is focused; and a controller (250) which measures a Thomson scattering signal for the plasma by using the first and second collection signals measured by the collection optic system (230), wherein the optical system (220) includes : a polarizing beam splitter (PBS) (221) which is disposed on an optical path of the pulsed laser beam supplied from the light source (200) ; a first reflectingmirror (229) which supplies the pulsed laser beams reflected from the PBS (221) back to the PBS(221); a Faraday rotator (222) which is disposed on the optical path of the pulsed laser beam passing through the PBS and rotates the polarization state by 45 degrees and outputs the pulsed laser beam; a focusing lens (226) which focuses the pulsed laser beam supplied from the Faraday rotator (222) on the plasma; and a second reflecting mirror (227) which reflects and supplies the focused pulsed laser beam back to the focusing lens (226), and wherein the pulsed laser beam in the vertical polarization state and the pulsed laser beam in the horizontal polarization state are sequentially supplied to the plasma; wherein the first collection signal is a signal in which a Thomson scattering signal and a background scattering noise signal are mixed, and the second collection signal is a background scattering noise signal; and wherein the controller (250) can accurately measure only the pure Thomson scattering signal by removing the second collection signal from the first collection signal.

Preferably, in the plasma diagnosis system using Thomson scattering according to the above aspect, the optical system further comprises a trigger module (240) which generates and outputs trigger signals when the pulsed laser beams in the horizontal polarization state and the pulsed laser beams in the vertical polarization state are supplied from the optical system (220), respectively, wherein the collection optic system (230) is driven according to the trigger signals output from the trigger module (240).

Preferably, in the plasma diagnosis system using Thomson scattering according to the above aspect, the trigger module (240) is disposed between the light source (200) and the optical system (220) or at an arbitrary position of the optical system (220) and generates and outputs the trigger signal when detecting that the pulsed laser beam is supplied from the light source to the optical system, detecting that the pulsed laser beam is supplied from the optical system to the plasma, or detecting that the pulsed laser beam is supplied at an arbitrary position of the optical system.

### EFFECTS OF THE INVENTION

The multiple-path plasma diagnosis system according to the present invention sequentially supplies a pulsed laser beam in a vertical polarization state and a pulsed laser beam in a horizontal polarization state to a tokamak to be focused through multiple reciprocating paths, so that it is possible to measure and supply a Thomson scattering signal from which a background scattering noise signal is removed.

### BRIEF DESCRIPTION OF DRAWINGS

FIG. 1 is a configuration diagram schematically illustrating a diagnosis apparatus using single-path Thompson scattering in the related art for diagnosing a state of plasma in a tokamak of a nuclear fusion reactor.
FIG. 2 is a configuration diagram schematically illustrating a plasma diagnosis system using multiple-reciprocating-path Thomson scattering according to the present invention.
FIG. 3 is a diagram illustrating a polarization state of a pulsed laser beam in each stage in the plasma diagnosis system using multiple- reciprocating-path Thomson scattering according to the present invention.

### BEST MODE FOR CARRYING OUT THE INVENTION

In a plasma diagnosis system using Thomson scattering according to the present invention in accordance with the appended claims, a pulsed laser beam in a vertical polarization state and a pulsed laser beam in a horizontal polarization state are sequentially supplied into a tokamak in a nuclear fusion reactor through multiple reciprocating paths, and scattering signals in the tokamak are measured, so that it is possible to accurately measure a Thomson scattering signal from which a background scattering noise signal is removed.

Hereinafter, a structure and operation of a plasma diagnosis system using Thompson scattering according to a preferred embodiment of the present invention will be described in detail with reference to the accompanying drawings.

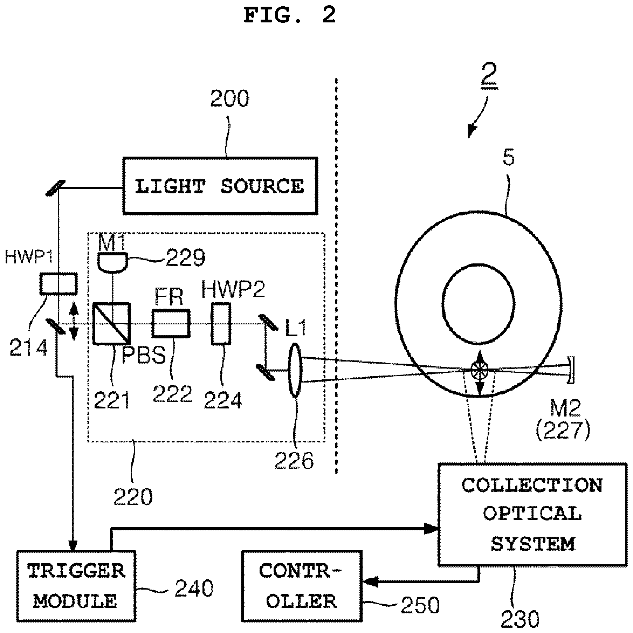

FIG. 2 is a block diagram schematically illustrating a plasma diagnosis system using multiple-reciprocating-path Thompson scattering according to the present invention. the present invention.

Referring to FIG. 2, a plasma diagnosis system 2 according to the present invention is installed outside a tokamak 5 of a nuclear fusion reactor and includes a light source 200, an optical system 220 which sequentially supplies a vertically-polarized pulsed laser beam and a horizontally-polarized pulsed laser bam to the tokamak, a collection optic system 230 which collects scattered light in the tokamak, a trigger module 240, and a controller 250.

The light source 200 outputs a pulsed laser beam in a horizontal polarization state with a single wavelength of 1064 nm and a strong electric field intensity.

The first half wave plate (HWP) 214 is disposed on the optical path of the pulsed laser beam output from the light source to select and maintain the polarization state of the propagating pulsed laser beam.

The optical system 220 is provided between the light source and the tokamak 5 to sequentially supply a pulsed laser beam in a vertical polarization state and a pulsed laser beam in a horizontal polarization state to the tokamak.

The optical system 220 includes a polarizing beam splitter (PBS) 221 disposed on the optical path of the pulsed laser beam supplied from the light source, a Faraday rotator (FR) 222, a second half wave plate (HWP) 224, and a focusing lens 226 disposed on the optical path of the pulsed laser beam passing through the PBS, a second reflecting mirror 227 for reflecting the beam focused by the focusing lens 226 and supplying the beam back to the focusing lens, and a first reflecting mirror 229 disposed on a reflecting path of the PBS.

The second reflecting mirror uses a concave lens to focus the beam back to the position of Thompson scattering, and the first reflecting mirror uses a convex lens to collimate the reflected light.

The polarizing beam splitter (PBS) 221 transmits the beam in the horizontal polarization state and reflects the beam in the vertical polarization state.

The Faraday rotator 222, the second half wave plate 224, and the focusing lens 226 are sequentially disposed on the optical path of the pulsed laser beam passing through the PBS 220. The Faraday rotator 222 rotates the polarization state of the pulsed laser beam passing through the PBS 221 by 45 degrees and outputs the pulsed laser beam, and the second half wave plate 224 rotates the beam output from the Faraday rotator 222 by 45 degrees, so that the pulsed laser beams in the horizontal polarization state are in the vertical polarization state by the Faraday rotator 222 and the second half wave plate 224. The first half wave plate 214 may be omitted in the case where the polarization from the laser beam source is in a perfectly horizontal polarization state. In some cases, in principle, the second half wave plate 224 may be omitted according to the position of a Thomson scattering collection unit. The focusing lens 226 focuses the pulsed laser beam in the vertical polarization state on a predetermined position in the tokamak in the nuclear fusion reactor. When the pulsed laser beam is focused into the tokamak by the focusing lens, the first Thomson scattering is strongly generated in the direction of the collection optic system. As a result, the first-1 collection signal, in which the background scattering noise signal and the Thomson scattering signal are mixed is collected by the collection optic system 230 and is transmitted to a polychrometer, by which the collection signal is is measured for each wavelength band.

The second reflecting mirror 227 may be installed inside or outside the tokamak and reflects the beam passing through the tokamak back to the focusing lens. In this stage, the collection optic system measures the first-2 collection signal in which the background scattering noise signal and the Thomson scattering signal are mixed.

The first reflecting mirror 229 is disposed in the reflecting path of the PBS 221. The pulsed laser beam in the vertical polarization state reflected from the PBS propagates to be reflected by the first reflecting mirror 229 and is incident on the PBS again.

The optical system 220 having the above-described configuration sequentially supplies the pulsed laser beam in the vertical polarization state and the pulsed laser beam in the horizontal polarization state into the tokamak in the nuclear fusion reactor.

The collection optic system 230 collects the beam scattered from the tokamak to measure the intensity of the beam. The collection optic system collects the beams according to the trigger signal of the trigger module and supplies collection signals to the controller.

The trigger module 240 generates the trigger signals and outputs the trigger signals to the collection optic system and/or the controller when the pulsed laser beam in the horizontal polarization state and the pulsed laser beam in the vertical polarization state are supplied from the optical system. The trigger module may detect an extra laser beam signal transmitted through a folding mirror disposed at a trigger point set between the light source and the optical system or at an arbitrary position of the optical system to use the extra laser beam signal as a trigger signal.

The collection optic system is driven according to the trigger signal output from the trigger module to collect light scattered in the tokamak and supply the scattered light.

The controller 250 measures a Thomson scattering signal with no background scattering noise signal by using the first and second collection signals supplied from the collection optic system and supplies the Thomson scattering signal. More specifically, the controller allows Thomson scattering to be generated from the plasma in the tokamak by the pulsed laser beam in the vertical polarization state of the optical system and measures the first collection signal in which the Thomson scattering signal and the background scattering noise signal are mixed. In addition, the controller allows Thomson scattering not to be generated from the plasma in the tokamak by the pulsed laser beam in the horizontal polarization state of the optical system and measures the second collection signal configured with only the background scattering noise signal. Therefore, the controller can accurately measure only the pure Thomson scattering signal by removing the second collection signal configured with only the background scattering noise signal from the first collection signal in which the Thomson scattering signal and the background scattering noise signal are mixed.

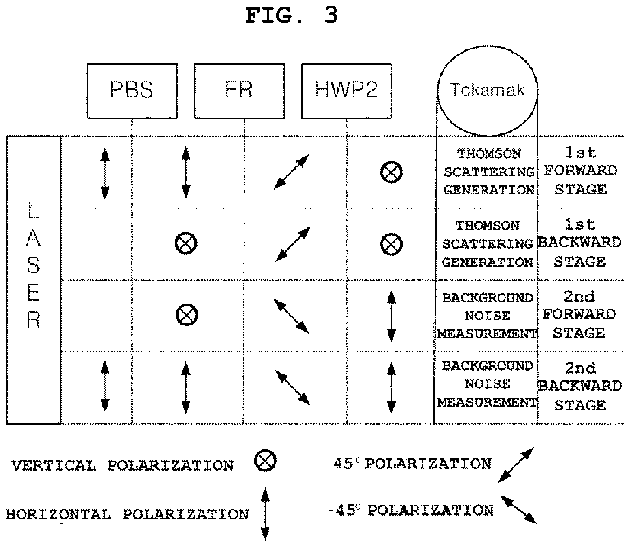

Hereinafter, the operation of the plasma diagnosis system using multiple-reciprocating-path Thompson scattering having the above-described configuration according to the preferred embodiment of the present invention will be described in detail with reference to FIG. 3.

FIG. 3 is a diagram illustrating a polarization state of the pulsed laser beam in each stage in the plasma diagnosis system using multiple-reciprocating-path Thompson scattering according to the present invention.

Referring to FIG. 3, when a pulsed laser beam in a horizontal polarization state is output and supplied from the light source, in the first forward stage, the pulsed laser beam passes through the PBS 221, passes through the FR 222 to be rotated by 45 degrees, and is rotated by 45 degrees again by the second HWP 224, so that the pulsed laser beam is converted to be in the vertical polarization state. When the pulsed laser beam in the vertical polarization state is focused on a predetermined position inside the tokamak, the first Thomson scattering is strongly generated in the direction of the collection optic system 230. As a result, the collection optic system measures the first-1 collection signal in which the background scattering noise signal and the Thomson scattering signal are mixed.

Next, the beam focused into the tokamak propagates after Thompson scattering and is reflected by the second reflecting mirror 227, and the first backward stage proceeds. In the first backward stage, as the pulsed laser beam is focused into the tokamak, the second Thomson scattering is generated. The collection optic system measures the second first-2 collection signal in which the background scattering noise signal and the Thomson scattering signal are mixed due to the second Thompson scattering.

Next, in the first backward stage, the pulsed laser beam in the vertical polarization state passing through the tokamak passes through the second HWP 224 and is rotated by 45 degrees in the backward direction by 45 degrees, and returns to the original state and as the beam is rotated by 45 degrees by the FR 222 again, so that the pulsed laser beam is in the vertical polarization state.

The pulsed laser beam in the vertical polarization state is reflected by the PBS 221 and propagates to the first reflecting mirror 229.

The pulsed laser beam in the vertical polarization state reflected by the first reflecting mirror is incident on the PBS 221 again and then reflected.

Next, in the second forward stage, the pulsed laser beam in the vertical polarization state incident on the PBS from the first reflecting mirror is reflected by the PBS, passes through the FR 222, and is rotated by 45 degrees. The pulsed laser beam is converted to be in the horizontal polarization state by the second HWP 224.

As the pulsed laser beam in the horizontal polarization state is focused inside the tokamak, Thomson scattering is not generated in the direction of the collection optic system 230, and the collection optic system measures the second-1 collection signal configured with only the background scattering noise signal.

Next, the beam focused into the tokamak propagates and is reflected by the second reflecting mirror 227, and the second backward stage proceeds. In the second backward stage, the pulsed laser beam in the horizontal polarization state are focused again inside the tokamak and propagate to the focusing lens with no Thomson scattering in the direction of the collection optic system 230. At this time, the collection optic system measures the second-2 collection signal configured with only the background scattering noise signal.

The controller receives the first-1 and first-2 collection signals in which the background scattering noise signal and the Thomson scattering signal are mixed from the collection optic system and receives the second-1 and second-2 collection signals configured with only the background scattering noise signal, so that it is possible to accurately measure only the Thomson scattering signal by using these collection signals.

As described above, the plasma diagnosis system using the multiple-reciprocating-path Thomson scattering according to the present invention can accurately measure the Thomson scattering signal.

On the other hand, the plasma diagnosis system according to the present invention can be applied to a tokamak-type nuclear fusion reactor. In this case, the optical system focuses the pulsed laser beams into the tokamak, the collection optic system collects scattered optical signals in the tokamak, and the controller measures the Thomson scattering signal in the tokamak.

While the present invention has been particularly illustrated and described with reference to exemplary embodiments thereof, it should be understood by the skilled in the art that the invention is not limited to the disclosed embodiments, but various modifications and applications not illustrated in the above description can be made without departing from the scope of the invention as set forth in the appended claims.

### INDUSTRIAL APPLICABILITY

The plasma diagnosis system according to the present invention can be used variously in apparatuses requiring measurement of the temperature and density of plasma, and in particular, can be used to diagnose the state of plasma inside a tokamak-type nuclear fusion reactor.

## Claims

1. A plasma diagnosis system using multiple-reciprocating-path Thomson scattering, comprising:
a light source (200) which supplies pulsed laser beams having predetermined polarization and wavelength;
an optical system (220) which sequentially supplies a pulsed laser beam in a vertical polarization state and a pulsed laser beam in a horizontal polarization state by using the pulsed laser beams supplied from the light source (200);
a collection optic system (230) which measures a first collection signal scattered from the plasma when the pulsed laser beam in the vertical polarization state supplied from the optical system is focused and measures a second collection signal scattered from the plasma when the pulsed laser beam in the horizontal polarization state supplied from the optical system (220) is focused; and
a controller (250) which measures a Thomson scattering signal for the plasma by using the first and second collection signals measured by the collection optic system (230),
wherein the optical system (220) includes:
a polarizing beam splitter, PBS (221), which is disposed on an optical path of the pulsed laser beam supplied from the light source (200) ;
a first reflecting mirror (229) which supplies the pulsed laser beams reflected from the PBS (221) back to the PBS (221);
a Faraday rotator (222) which is disposed on the optical path of the pulsed laser beam passing through the PBS and rotates the polarization state by 45 degrees and outputs the pulsed laser beam;
a focusing lens (226) which focuses the pulsed laser beam supplied from the Faraday rotator (222) on the plasma; and
a second reflecting mirror (227) which reflects and supplies the focused pulsed laser beam back to the focusing lens (226), and
wherein the pulsed laser beam in the vertical polarization state and the pulsed laser beam in the horizontal polarization state are sequentially supplied to the plasma;
wherein the first collection signal is a signal in which a Thomson scattering signal and a background scattering noise signal are mixed, and the second collection signal is a background scattering noise signal; and
wherein the controller (250) accurately measures only the pure Thomson scattering signal by removing the second collection signal from the first collection signal.

2. The plasma diagnosis system according to claim 1, further comprising a trigger module (240) which generates and outputs trigger signals when the pulsed laser beams in the horizontal polarization state and the pulsed laser beams in the vertical polarization state are supplied from the optical system (220), respectively, wherein the collection optic system (230) is driven according to the trigger signals output from the trigger module (240).

3. The plasma diagnosis system according to claim 2, wherein the trigger module (240) is disposed between the light source (200) and the optical system (220) or at an arbitrary position of the optical system (220) and generates and outputs the trigger signal when detecting that the pulsed laser beam is supplied from the light source to the optical system, detecting that the pulsed laser beam is supplied from the optical system to the plasma, or detecting that the pulsed laser beam is supplied at an arbitrary position of the optical system.

4. A plasma apparatus comprising the plasma diagnosis system according to any one of claims 1 to 3.

## Patentansprüche

1. Plasma-Diagnosesystem unter der Verwendung von mehrfach-reziprozierendem-Pfad Thomson-Streuung, umfassend:
eine Lichtquelle (200), die gepulste Laserstrahlen mit einer vorbestimmten Polarisierung und Wellenlänge zuführt;
ein optisches System (220), das unter der Verwendung der gepulsten Laserstrahlen, die von der Lichtquelle (200) zugeführt werden aufeinanderfolgend einen gepulsten Laserstrahl in einem vertikalen Polarisierungszustand und einen gepulsten Laserstrahl in einem horizontalen Polarisierungszustand zuführt;
ein optisches Sammelsystem (230), das ein erstes gestreutes Sammelsignal von dem Plasma misst, wenn der gepulste Laserstrahl in dem vertikalen Polarisierungszustand wie von dem optischen System zugeführt gebündelt wird und ein zweites gestreutes Sammelsignal von dem Plasma misst, wenn der gepulste Laserstrahl in dem horizontalen Polarisierungszustand wie von dem optischen System (220) zugeführt gebündelt wird; und
einen Controller (250), der ein Thomson-Streuungssignal für das Plasma unter der Verwendung der ersten und zweiten Sammelsignale wie durch das optische Sammelsystem (230) gemessen misst,
wobei das optisches System (220) einschließt:
einen polarisierenden Strahlteiler, PBS (221), der auf einem optischen Pfad des gepulsten Laserstrahls wie zugeführt von der Lichtquelle (200) angeordnet ist;
ein erster reflektierender Spiegel (229), der die von dem PBS (221) reflektierten gepulsten Laserstrahlen zurück zu dem PBS (221) zuführt;
einen Faraday-Rotator (222) der auf dem optischen Pfad des gepulsten Laserstrahls angeordnet ist, der durch den PBS hindurch passiert, und den Polarisierungszustand um 45 Grad dreht und den gepulsten Laserstrahl ausgibt;
eine bündelnde Linse (226), die den von dem Faraday-Rotator (222) zugeführten gepulsten Laserstrahl auf das Plasma bündelt; und
ein zweiter reflektierender Spiegel (227), der den gebündelten gepulsten Laserstrahl zurück auf die bündelnde Linse (226) reflektiert und zuführt, und
wobei der gepulste Laserstrahl in dem vertikalen Polarisierungszustand und der gepulste Laserstrahl in dem horizontalen Polarisierungszustand dem Plasma aufeinanderfolgend zugeführt werden;
wobei das erste Sammelsignal ein Signal ist, in dem ein Thomson-Streuungssignal und ein Hintergrund Verzerrungs-Streuungssignal gemischt sind, und das zweite Sammelsignal ein Hintergrund Verzerrungs-Streuungssignal ist; und
wobei der Controller (250) nur das reine Thomson-Streuungssignal durch Entfernen des zweiten Sammelsignals aus dem ersten Sammelsignal genau misst.

2. Plasma-Diagnosesystem nach Anspruch 1, weiter umfassend ein Auslösemodul (240) das Auslösesignale erzeugt und ausgibt, wenn die gepulsten Laserstrahlen in dem horizontalen Polarisierungszustand und die gepulsten Laserstrahlen in dem vertikalen Polarisierungszustand jeweils von dem optischen System (220) zugeführt werden, wobei das optische Sammelsystem (230) gemäß der Ausgabe der Auslösesignale von dem Auslösemodul (240) angetrieben wird.

3. Plasma-Diagnosesystem nach Anspruch 2, wobei das Auslösemodul (240) zwischen der Lichtquelle (200) und dem optischen System (220) oder an einer arbiträren Position des optischen Systems (220) angeordnet ist und das Auslösesignal erzeugt und ausgibt wenn es detektiert, dass der gepulste Laserstrahl der Lichtquelle zu dem optischen System zugeführt wird, wenn es detektiert, dass der gepulste Laserstrahl von dem optischen System zu dem Plasma zugeführt wird, oder wenn es detektiert, dass der gepulste Laserstrahl an einer arbiträren Position des optischen Systems zugeführt wird.

4. Plasmavorrichtung, umfassend das Plasma-Diagnosesystem nach eine der Ansprüche 1 bis 3.

## Revendications

1. Système de diagnostic par plasma utilisant la diffusion Thomson à trajets multiples réciproque, comprenant:
une source de lumière (200) qui fournit des faisceaux laser pulsés ayant une polarisation et une longueur d'onde prédéterminées ;
un système optique (220) qui fournit séquentiellement un faisceau laser pulsé dans un état de polarisation verticale et un faisceau laser pulsé dans un état de polarisation horizontale en utilisant les faisceaux laser pulsés fournis par la source de lumière (200) ;
un système optique de collecte (230) qui mesure un premier signal de collecte diffusé à partir du plasma lorsque le faisceau laser pulsé dans l'état de polarisation verticale fourni par le système optique est focalisé et mesure d'un second signal de collecte diffusé à partir du plasma lorsque le faisceau laser pulsé dans l'état de polarisation horizontale fourni par le système optique (220) est focalisé ; et
un contrôleur (250) qui mesure un signal de diffusion Thomson pour le plasma en utilisant les premier et second signaux de collecte mesurés par le système optique de collecte (230),
dans lequel le système optique (220) comprend :
un séparateur de faisceau polarisant, PBS (221), qui est disposé sur un chemin optique du faisceau laser pulsé fourni par la source de lumière (200) ;
un premier miroir réfléchissant (229) qui renvoie les faisceaux laser pulsés réfléchis par le PBS (221) au PBS (221) ;
un rotateur de Faraday (222) qui est disposé sur le chemin optique du faisceau laser qui traverse le PBS et fait tourner l'état de polarisation de 45 degrés et émet le faisceau laser puisé ;
une lentille de focalisation (226) qui focalise le faisceau laser pulsé fourni par le rotateur de Faraday (222) sur le plasma ; et
un second miroir réfléchissant (227) qui réfléchit et fournit le faisceau laser pulsé renvoyé à la lentille de focalisation (226), et
dans lequel le faisceau laser pulsé à l'état de polarisation verticale et le faisceau laser pulsé à l'état de polarisation horizontale sont fournis séquentiellement au plasma ;
dans lequel le premier signal de collecte est un signal dans lequel un signal de diffusion de Thomson et un signal de bruit de fond de diffusion sont mélangés, et le second signal de collecte est un signal de bruit de fond de diffusion; et
dans lequel le contrôleur (250) mesure avec précision uniquement le signal de diffusion Thomson pur en retirant le second signal de collecte du premier signal de collecte.

2. Système de diagnostic par plasma selon la revendication 1, comprenant en outre un module de déclenchement (240) qui génère et émet des signaux de déclenchement lorsque les faisceaux laser pulsés dans l'état de polarisation horizontale et les faisceaux laser pulsés dans l'état de polarisation verticale sont fournis par le système optique (220), respectivement, dans lequel le système optique de collecte (230) est commandé en fonction des signaux de déclenchement émis par le module de déclenchement (240).

3. Système de diagnostic par plasma selon la revendication 2, dans lequel le module de déclenchement (240) est disposé entre la source de lumière (200) et le système optique (220) ou à une position arbitraire du système optique (220) et génère et émet le signal de déclenchement lorsqu'il détecte que le faisceau laser pulsé est fourni par la source de lumière au système optique, lorsqu'il détecte que le faisceau laser pulsé est fourni par le système optique au plasma, ou lorsqu'il détecte que le faisceau laser pulsé est fourni à une position arbitraire du système optique.

4. Appareil à plasma comprenant le système de diagnostic par plasma selon l'une des revendications 1 à 3.
